(19) Europäisches Patentamt

European Patent Office

Office européen des brevets

(11) **EP 0 894 822 B1**

(12) **EUROPÄISCHE PATENTSCHRIFT**

(45) Veröffentlichungstag und Bekanntmachung des Hinweises auf die Patenterteilung:
**17.01.2001 Patentblatt 2001/03**

(51) Int Cl.[7]: **C08K 5/16**, C08L 57/04, C04B 40/00

(21) Anmeldenummer: **98112243.5**

(22) Anmeldetag: **02.07.1998**

(54) **Vernetzbare, in Wasser redispergierbare Pulverzusammensetzung**

Crosslinkable redispersible powder composition

Composition en poudre redispersable et durcissable

(84) Benannte Vertragsstaaten:
**DE FR IT SE**

(30) Priorität: **31.07.1997 DE 19733104**

(43) Veröffentlichungstag der Anmeldung:
**03.02.1999 Patentblatt 1999/05**

(73) Patentinhaber: **Wacker-Chemie GmbH**
**81737 München (DE)**

(72) Erfinder:
• **Ball, Peter, Dr.**
**84547 Emmerting (DE)**
• **Eck, Herbert, Dr.**
**83646 Bad Tölz (DE)**

(74) Vertreter: **Schuderer, Michael, Dr. et al**
**Wacker-Chemie GmbH**
**Zentralabteilung Patente**
**Marken und Lizenzen**
**Hanns-Seidel-Platz 4**
**81737 München (DE)**

(56) Entgegenhaltungen:
**EP-A- 0 702 059**

• **DATABASE WPI Section Ch, Week 7730 Derwent Publications Ltd., London, GB; Class A14, AN 77-52863Y XP002083234 & JP 52 069937 A (DAICEL LTD) , 10. Juni 1977**

EP 0 894 822 B1

## Beschreibung

Die Erfindung betrifft eine vernetzbare, in Wasser redispergierbare Pulverzusammensetzung sowie deren Verwendung.

In der EP-A 601518 werden vernetzbare, in Wasser redispergierbare Dispersionspulver auf der Basis von Carboxylgruppenhaltigen Acrylatmischpolymerisaten beschrieben, welche in Gegenwart von Polyvinylalkohol getrocknet werden und zur Vernetzung polyvalente Metallionen enthalten können. Ähnliche vernetzbare Dispersionspulver sind auch aus der US-A 3409578 bekannt, in der Pulverzusammensetzungen aus Carboxylgruppen-haltigen Polymeren und/oder carboxylgruppenhaltigen Schutzkolloiden in Gegenwart von polyvalenten Metallionen vernetzt werden. Nachteilig ist, daß derartige Zusammensetzungen mit polyvalenten Metallsalzen, welche in Gegenwart von Wasser Säure freisetzen zur vorzeitigen Vernetzung, speziell bei Kontakt mit Feuchtigkeit, neigen.

Zur Vermeidung der vorzeitigen Vernetzung wird in der EP-A 702059 (US-A 5608011) vorgeschlagen, vernetzbare Dispersionspulver von N-Methylol-haltigen Copolymerisaten mit einer Katalysatorkombination aus wasserlöslichen oder in Wasser dispergierbaren Peroxosäuresalzen bzw. Reduktionsmitteln einzusetzen. Die EP-B 687317 beschreibt in Wasser redispergierbare, vernetzbare Pulver auf der Basis von N-Methylol-funktionellen Copolymerisaten, welche in der Wärme vernetzen. Nachteilig bei dem zuletztgenannten Pulver ist die Tatsache, daß ausschließlich durch Wärme vernetzbare Pulver in vielen Anwendungen nicht eingesetzt werden können.

Aus der EP-A 723975 sind vernetzbare Dispersionspulver auf der Basis von Epoxidgruppen-haltigen Copolymerisaten bekannt. Zur Vernetzung werden externe Vernetzer beispielsweise Polyamine, Polycarbonsäuren, hydroxyfunktionalisierte Polymere sowie polyvalente Metallsalze zugegeben. Problematisch beim Einsatz von Polyaminen oder polyvalenten Metallsalzen ist die geringe Lagerstabilität. Der Einsatz von Polycarbonsäure bzw. hydroxyfunktionalisierten Polymeren beeinträchtigt die Lagerstabilität nicht; allerdings muß zur Reaktion mit den Epoxygruppen bei erhöhter Temperatur gearbeitet werden, da ansonsten die in der Anmeldung angegebene Stabilisierung der Dispersionspulver mit üblichen Schutzkolloiden nicht möglich wäre.

Aus der EP-A 721004 sind vernetzbare, redispergierbare Pulvermischungen bekannt, welche filmbildende Polymerteilchen mit mindestens einer funktionellen, vernetzbaren Gruppe enthalten. Zur Vernetzung wird auch in dieser Schrift die Zugabe eines externen, wasserlöslichen oder in Wasser dispergierbaren Vernetzers empfohlen, der mindestens eine reaktive Komponente umfaßt, welche mit den funktionellen Gruppen nichtionische Bindungen eingeht, nachdem die Mischung in Wasser redispergiert wird. Die Vernetzerkomponente kann ein wasserlösliches oder emulgierbares Monomer oder Polymer sein, oder aber eine pulverförmige Mischung aus dem Vernetzer und einem anorganischen Träger, wie $CaCO_3$, Ton oder Siliciumdioxid. Die Bindung der Vernetzerkomponente auf diesen Trägersubstanzen ist eine physikalische Adsorption. Das hat den Nachteil, daß diese Mischungen den gleichen, wenn etwas abgeschwächten Geruch aufweisen, wie die reine Vernetzerkomponente. Zudem kann, aufgrund der schwachen physikalischen Bindung die Vernetzerkomponente abspalten und in das zu vernetzende Polymer eindringen, was insbesondere bei sehr reaktionsfähigen Substanzen, zu verminderter Lagerfähigkeit bzw. Vorvernetzungen führen kann. Dies gilt insbesondere dann, wenn die Schutzkolloid-Komponente funktionelle Gruppen aufweist.

Es bestand daher die Aufgabe ein vernetzbares, gut lagerstabiles, blockstabiles und gut rieselfähiges, in Wasser dispergierbares, filmbildendes Polymerpulver bereitzustellen.

Gegenstand der Erfindung ist eine in Wasser redispergierbare, vernetzbare Pulverzusammensetzung enthaltend

a) 30 bis 95 GewTeile ein oder mehrere in Wasser unlösliche, filmbildende Polymerisate aus radikalisch polymerisierbaren, ethylenisch ungesättigten Monomeren, wobei 0.5 bis 10 Gew% der Monomere, bezogen auf das Gesamtgewicht des Polymerisats a), solche mit einem oder mehreren Substituenten aus der Gruppe umfassend Aldehyd-, Keto-, Epoxid-, Isocyanat-, Carbonsäureanhydrid- und Aziridin- Gruppen sind,
b) 5 bis 70 GewTeile ein oder mehrere, in Wasser lösliche, Polymere, wobei sich die Gewichtsteile von a) und b) auf 100 GewT aufaddieren, und
c) ein oder mehrere Verbindungen die mindestens zwei, in Salzform vorliegende, funktionelle Gruppen aus der Reihe der Amine, der Hydrazide, der Hydroxylaminester, der Aryl- und Alkylhydrazine oder -hydrazone enthalten.

Geeignete in Wasser unlösliche Polymerisate enthalten eine oder mehrere Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Fumarsäure- und Maleinsäure-mono- oder -diester von unverzweigten oder verzweigten Alkoholen mit 1 bis 12 C-Atomen, der Diene wie Butadien oder Isopren, der Olefine wie Ethen oder Propen, der Vinylaromaten wie Styrol, Methylstyrol, Vinyltoluol, der Vinylhalogenide wie Vinylchlorid. Unter wasserunlöslich ist dabei zu verstehen, daß die Löslichkeit der Polymerisate unter Normalbedingungen weniger als 1 g pro Liter Wasser beträgt. Für die Filmbildung wird im allgemeinen die Polymerzusammensetzung so gewählt, daß bei der Verarbeitungstemperatur Filmbildung erfolgt, vorzugsweise so, daß eine Glasübergangstemperatur Tg von -30°C bis +80°C resultiert.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa09[R] oder VeoVa10[R] (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl- Gruppe.

Das Polymerisat a) kann noch 0.05 bis 10.0 Gew%, bezogen auf das Gesamtgewicht des Polymerisats a) Hilfsmonomere aus der Gruppe der ethylenisch ungesättigten Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und/oder N-Vinylpyrrolidon enthalten.

Weitere Beispiele für Hilfsmonomere sind hydrophobierende und anvernetzende Alkoxysilan-funktionelle Monomereinheiten wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy-, Methoxyethylen-, Ethoxyethylen-, Methoxypropylenglykolether- und Ethoxypropylenglykolether-Reste enthalten sein können. Bevorzugt werden Vinyltriethoxysilan und gamma-Methacryloxypropyltriethoxysilan.

Weitere Beispiele für Hilfsmonomere sind Zusatzvernetzer wie Acrylamidoglykolsäure (AGA), Methacrylamidoglykolsäuremethylester (MAGME), N-Methylol-acrylamid (NMAA), N-Methylolmethacrylamid, N-Methylolallylcarbamat, Alkylether von N-Methylolacrylamid oder N-Methylolmethacrylamid sowie deren Isobutoxyether oder n-Butoxyether.

Als Hilfsmonomere geeignet sind auch mehrfach ethylenisch ungesättigten Comonomere wie Ethylenglykoldiacrylat, 1,3-Butylenglykoldiacrylat, 1,4-Butylenglykoldiacrylat, Propylenglykoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Vorzugsweise werden 1 bis 5 Gew% Comonomere mit einem oder mehreren Substituenten aus der Gruppe umfassend Aldehyd-, Keto-, Epoxid-, Isocyanat-, Carbonsäureanhydrid- und Aziridin-Gruppe copolymerisiert.

Geeignete Aldehyd- und Ketogruppen enthaltende Monomere sind Acrolein, Vinylmethylketon, Acetessigsäureallylester, Acetessigsäurevinylester, Vinyl- oder Allylbisacetoacetat und acetoacetylierte Hydroxyalkyl(meth)acrylate. Geeignete epoxygruppenhaltige Monomere sind Glycidylacrylat, Glycidylmethacrylat, Glycidylvinylether und Glycidylallylether. Als Isocyanate seien beispielhaft genannt meta- und para-Isopropenyl-alpha,alpha-dimethyl-benzylisocyanat (TMI), 2-Methyl-2-isocyanatopropylmethacrylat, wobei die Isocyanatgruppen der genannten Monomere gegebenenfalls auch blockiert sein können, beispielsweise mit Phenol, Salicylsäureester, Ketoxim, Caprolactam, Malonsäuredialkylester, Acetessigsäurealkylester, 2,2-Dimethyl-1,3-dioxan-4,6-dion. Beispiele für Anhydrid-Comonomere sind Allylbernsteinsäureanhydrid und Maleinsäureanhydrid.

Als vernetzbare Monomereinheiten bevorzugt werden Glycidyl(meth)acrylat, meta- und para-Isopropenyl-alpha,alpha-dimethylbenzylisocyanat (TMI), Allylacetoacetat, gegebenenfalls acetoacetyliertes Hydroxyethyl(meth)acrylat bzw. Hydroxypropyl(meth)acrylat.

Als Polymere a), welche die genannten, vernetzbaren Comonomereinheiten in den angegebenen Mengen enthalten, werden bevorzugt:

Aus der Gruppe der Vinylester-Polymerisate Vinylacetat-Polymerisate;

Vinylacetat-Ethylen-Copolymere mit einem Ethylengehalt von 1 bis 60 Gew%;

Vinylester-Ethylen-Vinylchlorid-Copolymere mit einem Ethylengehalt von 1 bis 40 Gew% und einem Vinylchlorid-Gehalt von 20 bis 90 Gew%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester, enthalten sind;

Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9[R], VeoVa10[R]), welche gegebenenfalls noch 1 bis 40 Gew% Ethylen enthalten;

Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;

Vinylester-Acrylsäureester-Copolymerisate mit 30 bis 75 Gew% Vinylacetat, 1 bis 30 Gew% Vinyllaurat oder Vinylester einer alpha-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;

Vinylester-Copolymerisate mit Estern der Maleinsäure oder Fumarsäure wie Diisopropyl-, Di-n-butyl, Di-t-butyl-, Di-ethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Aus der Gruppe der (Meth)acrylsäurepolymerisate Polymerisate von n-Butylacrylat oder 2-Ethylhexylacrylat; Copolymerisate von Methylmethacrylat mit n-Butylacrylat und/oder 2-Ethylhexylacrylat.

Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere.

Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 1 bis 70 Gew%.

Als wasserlösliche Polymerisate b) sind wasserlösliche Schutzkolloide geeignet, wie sie zur Polymerisation des Polymerisats a) bzw. zur Sprühtrocknung der wässrigen Dispersionen von Polymerisat a) eingesetzt werden. Unter wasserlöslich ist dabei zu verstehen, daß die Löslichkeit bei Normalbedingungen mehr als 10 g pro Liter Wasser beträgt. Geeignete Schutzkolloide sind im Handel erhältlich. Beispiele für geeignete Schutzkolloide sind Polyvinylalkohole mit 75 bis 100 Mol%, bevorzugt 78 bis 95 Mol%, Vinylalkoholeinheiten und einem Molekulargewicht von vorzugsweise 5000 bis 200000; Polyvinylpyrrolidone mit einem K-Wert von 10 bis 120; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein, Sojaprotein, Gelatine; Ligninsulfonate; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Als blockierte Vernetzer c) kommen niedermolekulare und hochmolekulare, organische Verbindungen in Frage, die entweder in fester Form vorliegen oder, beispielsweise durch Adsorption an einen Festkörper vor der Zugabe zur Pulverzusammensetzung in eine feste Form umgewandelt werden. Beispiele für Vernetzer c) sind die Salze von Di-, und Polyaminen, welche im Stand der Technik in freier Form als Vernetzer eingesetzt werden.

Geeignete Di- und Polyamine sind in Houben-Weyl, Bd. E20 Teil 3, S. 1965-1975 genannt, beispielsweise Hexamethylendiamin, Diaminotetramethylcyclohexan, 1,3-Bisaminomethylbenzol, Triethylentriamin, Tetraethylentetramin, Polyethylenamin, Polyoxyalkylenamine wie Polyoxyethylenamin. Beispiele für Hydrazide sind Carbodihydrazid sowie die Dihydrazide von aliphatischen und alicyclischen Dicarbonsäuren und der Hexahydroterephthalsäure. Geeignet sind ferner Hydrazin und Aryl- und Alkylhydrazine oder -hydrazone wie N,N'-Dimethylhydrazin und die Bishydrazone von Glutaraldehyd und Terephthalaldehyd, sowie Hydroxylaminester. Die genannten Verbindungen können in bekannter Weise durch Umsetzung mit den entsprechenden Säuren in deren Salze überführt werden.

Als Säureanionen kommen die Anionen aller bekannten organischen und anorganischen Protonsäuren in Frage, die mit den genannten Aminverbindungen bei den üblichen Lagerungsbedingungen stabile Salze bilden. Als Beispiele seien genannt: HF, HCl, $H_2SO_4$, $H_3PO_4$, Phosphonsäuren, Kohlensäure, Ameisen- und Essigsäure, aber auch Fettsäuren, die nach der Abspaltung den Baustoff zusätzlich hydrophobieren, beispielsweise gesättigte oder ungesättigte, verzweigte oder unverzweigte $C_{10}$- bis $C_{18}$-Carbonsäuren wie Laurinsäure, Myristinsäure, Stearinsäure. Die Vernetzersalze können wasserlöslich, emulgierbar oder auch wasserunlöslich sein. Bevorzugt sind wasserlösliche oder in Wasser emulgierbare Vernetzersalze.

Bevorzugt werden die Halogenide, insbesonders Fluoride, Sulfate, Phosphate, Carbonate, Acetate und Formiate von Hexamethylendiamin, Triethylentetramin, Carbodihydrazid und von den Dihydraziden der aliphatischen und alicyclischen Dicarbonsäuren bzw. der Hexahydroterephthalsäure, beispielsweise Adipinsäuredihydrazid.

Die zugesetzte Menge dieser Salze, die einzeln oder im Gemisch zugegeben werden können, berechnet sich aus den funktionellen Gruppen im zu vernetzenden Polymeren. Pro funktionelle Gruppe im Polymerisat a) werden 0.1 bis 10, bevorzugt 0.5 bis 2, besonders bevorzugt 0.8 bis 1.2 Mol-Äquivalente der Stickstoffverbindungen zugemischt.

Die Herstellung der wasserunlöslichen Polymerisate a) erfolgt vorzugsweise mit dem Emulsionspolymerisationsverfahren. Diese wird im offenen Reaktionsgefäß oder in Druckgefäßen, in einem Temperaturbereich von 0°C bis 100°C durchgeführt und mit den für die Emulsionspolymerisation üblicherweise eingesetzten Methoden eingeleitet. Die Initiierung erfolgt mittels der gebräuchlichen, zumindest teilweise wasserlöslichen Radikalbildner, die vorzugsweise in Mengen von 0.01 bis 3.0 Gew% bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren eingesetzt werden. Geeignete Emulgatoren sind sowohl anionische, kationische als auch nichtionische Emulgatoren. Vorzugsweise werden die Emulgatoren in einer Menge bis zu 6 Gew%, bezogen auf das Gesamtgewicht der Monomeren, eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Herstellung erfolgt vorzugsweise in Gegenwart der obengenannten Schutzkolloide. Der für die Polymerisation gewünschte pH-Bereich, der im allgemeinen zwischen 2.5 und 10, vorzugsweise 3 und 8, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 60 %. Die mittlere Teilchengröße beträgt 0.1 bis 10 µm, vorzugsweise 0.2 bis 5 µm.

Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad, gewählt.

Zur Sprühtrocknung wird die Dispersion des Polymerisats a) mit einem Festgehalt von vorzugsweise 20 % bis 60 % gemeinsam mit Schutzkolloiden als Verdüsungshilfe versprüht und getrocknet werden. Als Schutzkolloide können dabei die obengenannten wasserlöslichen Polymere b) eingesetzt werden, wobei die Schutzkolloide der wässrigen Dispersion vor dem Sprühtrocknen, in Form einer wässrigen Lösung, zugegeben werden können.

Bevorzugt werden bei diesem Verfahrensschritt 5 bis 20 Gew% wasserlösliches Polymer b), bezogen auf Polymer a), zugesetzt.

Die in Salzform vorliegenden Stickstoff-Verbindungen c) werden vor oder nach der Trocknung, im Falle der bevorzugten Sprühtrocknung, beispielsweise am unteren Ende des Trockenturms oder in einer getrennten Vorrichtung zugemischt. Gegebenenfalls als Mischung mit diesen Vernetzern können andere Zusätze der Pulvermischung zugegeben werden.

Beispiele für Zusatzstoffe zur Modifizierung sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel umd Emulgatoren, wobei diese, falls sie im Originalzustand flüssig sind, vor dem Zumischen in einen pulverförmigen Zustand übergeführt werden müssen.

Die Dispersionspulverzusammensetzung kann in den dafür typischen Anwendungsbereichen eingesetzt werden. Voraussetzung ist die Anwesenheit von alkalisch wirkenden Stoffen, die die Freisetzung der N-Verbindungen aus ihren Salzen gewährleisten, oder die Möglichkeit der Anwendung höherer Temperaturen um die Salze zu spalten. Im letzteren Fall sind die Salze von Carbonsäuren und Kohlensäure bevorzugt. Beispiele für Anwendungen sind die in bauchemischen Produkten in Verbindung mit anorganischen, hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien und Papier. Vorzugsweise wird die Dispersionspulverzusammensetzung als Bindemittel in Anwendungsgebieten eingesetzt, in denen neben einer guten Haftung auch eine reduzierte Wasseraufnahme und/oder gute Lösungsmittelbeständigkeit erwünscht ist.

Die erfindungsgemäßen Redispersionspulver sind Produkte, die in Wasser gut redispergieren und bei der Anwendung in Pulverform oder als wässrige Dispersion mechanisch feste, vernetzte Filme bilden. Die Verwendung der unter c) genannten Verbindungen in Salzform bietet den Vorteil, daß die Vernetzungsreaktion erst nach Zugabe einer Base oder nach Spaltung der Salze bei entsprechend hoher Temperatur erfolgt. Der damit erzielte Vernetzungsgrad ist gut, die Laberstabilität der Pulvermischungen aufgrund der Blockierung der Vernetzer in Salzform ebenfalls gut. Zusätzlich verbessern diese Vernetzer im allgemeinen die Rieselfähigkeit der Mischungen. Besonders bei vielen Anwendungen im Bausektor ist diese Pulverzusammensetzung von großem Vorteil, da die in vielen Rezepturen und Fertigmischungen von Baustoffen enthaltenen Carbonate und Hydroxyde ($Ca(OH)_2$) im trockenen Zustand mit diesen Bindemitteln gemischt werden können und auch nach längerer Lagerungszeit noch keine Vernetzung hervorrufen.

Die nachfolgenden Beispiele dienen der weiteren Erläuterung der Erfindung:

Beispiel 1:

In einem 16 l Rührautoklaven wurden 3420 g Wasser, 352 g Polyvinylalkohol mit einer Höppler-Viskosität von 4 mPas (4 %-ige Lösung in Wasser bei 20°C) und einer Verseifungszahl von 140, 50 g Dodecylbenzolsulfonat (15 %-ig in Wasser), 510 g Vinylacetat und 200 g Ethylen vorgelegt und die Mischung auf 50°C erwärmt. Dann wurden die Katalysatorlösungen, eine 6 %-ige wässrige Lösung von Natriumpersulfat und eine 3 %-ige wässrige Lösung von Natriumformaldehydsulfoxylat, eingefahren. Nach Anspringen der Polymerisation wurde die Monomerdosierung aus 2800 g Vinylacetat und 120 g Glycidylmethacrylat eingefahren. Während der Polymerisation wurden weitere 800 g Ethylen nachgedrückt. Nach Ablauf der Dosierzeit von ca. 5 h wurde 2 h nachpolymerisiert.

Der Festgehalt der Dispersion betrug 51 %. Das Polymerisat hatte einen K-Wert von 74.5, eine Tg von 4°C, und eine MFT von 0°C.

Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140, sowie 0.8 Gew%, bezogen auf Polymer, Polyvinylalkohol mit einer Höppler-Viskosität von 5 mPas (4 %-ige Lösung in Wasser bei 20°C) und einer Verseifungszahl von 140 in Form von wässrigen Lösungen zugegeben. Der Festgehalt der zu verdüsenden Mischung betrug 35 Gew%. Die Trocknung erfolgte in einem Nubilosa-Sprühtrockner bei einer Austrittstemperatur von 82°C und einem Preßluftdruck vor der 2-Stoffdüse von 4 bar.

Beispiel 2:

In einem 16 l Rührautoklaven wurden 2000 g Wasser und 487 g Polyvinylalkohol mit einer Höppler-Viskosität von 4 mPas (4 %-ige Lösung in Wasser bei 20°C) und einer Verseifungszahl von 140 vorgelegt, auf 50°C erwärmt und Ethylen bis 60 bar aufgedrückt. Dieser Druck wurde während der gesamten Dosierzeit der Monomeren beibehalten. Die Katalysatordosierungen, eine 2.6 %-ige wässrige Lösung von t-Butylhydroperoxid und eine 4.5 %-ige wässrige Natriumformaldehydsulfoxylatlösung, wurden gleichzeitig mit der Monomerdosierung eingefahren. Die Monomerlösung bestand aus 4563 g Vinylchlorid, 1950 g Vinylacetat sowie 200 g Glycidylacrylat. Nach Reaktionsbeginn wurde innerhalb von 6 bis 7 Stunden eine Lösung von 667 g Polyvinylalkohol mit einer Höppler-Viskosität von 4 mPas (4 %-ige Lösung in Wasser bei 20°C) und einer Verseifungszahl von 140 in 3937 g Wasser dosiert. Die Dosierzeit der Monomermischung betrug 8 h. Nach Abschluß der Dosierung wurde 2 Stunden nachpolymerisiert. Der Festgehalt betrug 50.2 %. Die Tg des Polymers betrug 13.5 °C.

Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140 sowie 0.8 Gew%, bezogen auf Polymer, Polyvinylalkohol mit einer Höppler-Viskosität von 5 mPas (4 %-ige Lösung in Wasser bei 20°C) und einer Verseifungszahl von 140 in Form von wässrigen Lösungen zugegeben. Die Trocknung erfolgte wie im Beispiel 1 in einem Nubilosa-Sprühtrockner.

Beispiel 3:

Die Polymerisation und Verdüsung erfolgte analog Beispiel 1 mit dem Unterschied, daß anstelle von 120 g Glycidylmethacrylat 120 g Acetessigsäureallylester eingesetzt wurden. Die dabei erhaltene Dispersion hatte einen Festgehalt von 50.3 %. Das Polymerisat hatte einen K-Wert von 82.9, eine Tg von 1°C und eine MFT von 0 °C.

Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140 in Form einer 11 %-igen wässrigen Lösung zugegeben. Die Trocknung erfolgte analog Beispiel 1.

Beispiel 4:

In einem 2.5 l Rührgefäß wurden eine Lösung von 77.5 g Polyvinylalkohol mit einer Höppler-Viskosität von 4 mPas (4 %-ige Lösung in Wasser bei 20°C) und einer Verseifungszahl von 140 in 706 g Wasser vorgelegt und darin 120.6 g einer 1:1-Mischung (w/w) von Styrol und Butylacrylat voremulgiert. Nach dem Erwärmen der Emulsion auf 50°C wurden gleichzeitig die Dosierungen einer 4.9 %-igen wässrigen t-Butylhydroperoxidlösung, einer 8.3 %-igen wässrigen Ascorbinsäurelösung und 406 g einer 1:1-Mischung (w/w) von Styrol und Butylacrylat, in der 23.5 g meta-Isopropenyldimethylbenzylisocyanat gelöst waren, eingefahren. Nach 2 h war die Monomerdosierung beendet. Es wurde mit einer 10 %igen $H_2O_2$-Lösung nachpolymerisiert. Die Dispersion hatte einen Festgehalt von 50.4 % und einen pH von 5.0.

Vor der Verdüsung wurden der Dispersion 6 Gew% Polyvinylalkohol mit einer Höppler-Viskosität von 4 mPas (4 %-ige Lösung in Wasser bei 20°C) und einer Verseifungszahl von 140 in Form einer 20 %-igen, wässrigen Lösung zugegeben und die Mischung auf 30 % mit Wasser verdünnt.

Die Verdüsung erfolgte analog Beispiel 1.

Bestimmung der Vernetzung:

Eine bei Raumtemperatur getrocknete Filmprobe wurde in einem für die unvernetzte Probe geeigneten Lösungsmittel, im allgemeinen Dimethylformamid, 5 Minuten bei 170°C in der Mikrowelle erhitzt.
Die Auswertung erfolgte durch eine Festgehaltsbestimmung der gesiebten Flüssigkeit

$$\text{Vernetzungsgrad ( \% )} = \frac{\text{FG gemessen}}{\text{FG theoretisch}} - 1 \times 100$$

Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt.
Die Blockstabilität wurde wie folgt klassifiziert:

A = blockstabil
B = mäßig blockstabil
C = nicht blockstabil.

Bestimmung der Redispergierbarkeit der Filme:

Zur Bestimmung des Vernetzungsgrades der Filme wurde auf die jeweiligen mit der Redispersion hergestellten Filme ein Wassertropfen aufgetragen und nach 60 Sekunden Einwirkzeit durch Reiben mit der Fingerkuppe die Redispergierbarkeit der Filme geprüft.

Auswertung der Film-Redispergierbarkeit:

Note 1: sehr gut redispergierbar
Film läßt sich durch ganz leichtes Reiben sofort redispergieren oder redispergiert bereits selbständig.

Note 2: gut redispergierbar
Film läßt sich durch Reiben gut redispergieren; Filmstücke möglich, aber wenig und sehr leicht zwischen Fingern redispergierbar.

Note 3: etwas redispergierbar
Film läßt sich nur durch kräftiges Reiben redispergieren; Unterlage wird nur langsam unter Filmzerstörung (Filmstücke) erreicht; Filmstücke nicht redispergierbar.

Note 4: nicht redispergierbar
Film läßt sich auch durch längeres kräftiges Reiben nicht redispergieren; Film zerfällt ohne zu redispergieren in Filmstücke oder löst sich vom Untergrund.

Die Ergebnisse der Testung sind in der nachfolgenden Tabelle zusammengefaßt:
Die Beispiele zeigen, daß die erfindungsgemäßen Zusammensetzungen erst bei der Anwendung im Basischen aktiv werden, so daß eine vorzeitige Vernetzung unter Beeinträchtigung der Lagerstabilität nicht zu befürchten ist. Als Vergleich wurde das Pulver aus Beispiel 4 mit einem nicht als Salz vorliegenden Vernetzer getestet. Die damit erhaltene Vernetzung ist geringer als die mit der erfindungsgemäßen Zusammensetzung resultierende. Darüberhinaus verschlechtert sich auch die Blockstabilität der Pulverzusammensetzung.

Tabelle:

| Mischung | Vernetzung (%) | Blockfestigkeit | Redispergierbarkeit |
|---|---|---|---|
| Beispiel 1 (Disp. )+ HMDAP[1] | 10.5 | - | 1 |
| Beispiel 1 (Disp.) + HMDAP[1]+ 10%KM | 30.5 | - | 3-4 |
| Beispiel 1 (Pulver) + HMDAP[1] | 14.0 | A | 1 |
| Beispiel 1 (Pulver) + 10% KM + HMDAP[1] | 55.0 | A | 3-4 |
| Beispiel 2 (Pulver) + ASDHA[2] | 21.5 | A | 1-2 |
| Beispiel 2 + 10% KM + ASDHA[2] | 63.5 | A | 3-4 |
| Beispiel 3 (Pulver) + HMDAP[1] | 17.8 | A | 1-2 |
| Beispiel 3 + 10% KM + HMDAP[1] | 57.3 | A | 3 |
| Beispiel 4 (Pulver) | 27.8 | A | 1-2 |
| Beispiel 4 + 10 % KM + HMDAP[1] | 90.4 | A | 4 |
| Beispiel 4 + 0.5 % HMM[3] | 45.6 | B | 2-3 |

KM: Kalkmilch 1) HMDAP: Phosporsäuresalz von Hexamethylendiamin; Verhältnis der reaktiven Gruppen 1 : 1,2

2) ASDHA: Essigsäuresalz von Adipinsäuredihydrazid; Verhältnis der reaktiven Gruppen 1 : 1

3) HMM: Hexamethylendiamin

## Patentansprüche

1. In Wasser redispergierbare, vernetzbare Pulverzusammensetzung enthaltend

   a) 30 bis 95 GewTeile eines oder mehrerer in Wasser unlöslicher, filmbildenden Polymerisats aus radikalisch polymerisierbaren, ethylenisch ungesättigten Monomeren, wobei 0.5 bis 10 Gew% der Monomere, bezogen auf das Gesamtgewicht des Polymerisats a), solche mit einem oder mehreren Substituenten aus der Gruppe umfassend Aldehyd-, Keto-, Epoxid-, Isocyanat-, Carbonsäureanhydrid- und Aziridin-Gruppen sind,
   b) 5 bis 70 GewTeile ein oder mehrere, in Wasser lösliche, filmbildende Polymere, wobei sich die Gewichtsteile von a) und b) auf 100 GewT aufaddieren, und
   c) ein oder mehrere Verbindungen die mindestens zwei, in Salzform vorliegende, funktionelle Gruppen aus der Reihe der Amine, der Hydrazide, der Hydroxylaminester, der Aryl- und Alkylhydrazine oder -hydrazone, enthalten.

2. Vernetzbare, in Wasser redispergierbare Pulverzusammensetzung nach Anspruch 1, enthaltend als Polymer a) Polymerisate mit einer oder mehreren Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Fumarsäure- und Maleinsäuremono- oder -diester von unverzweigten oder verzweigten Alkoholen mit 1 bis 12 C-Atomen, der Diene, der Olefine, der Vinylaromaten, und der Vinylhalogenide.

3. Vernetzbare, in Wasser redispergierbare Pulverzusammensetzung nach Anspruch 1 oder 2, wobei das Polymer a) ein oder mehrere Monomereinheiten aus der Gruppe Acrolein, Vinylmethylketon, Acetessigsäureallylester, Acetessigsäurevinylester, Vinyl- oder Allylbisacetoacetat und acetoacetylierte Hydroxyalkyl(meth)acrylate, Glycidylacrylat, Glycidylmethacrylat, Glycidylvinylether, Glycidylallylether, meta- und para-Iso-propenyl-alpha,alphadimethyl-benzylisocyanat (TMI), 2-Methyl-2-isocyanatopropylmethacrylat, Allylbernsteinsäureanhydrid und Maleinsäureanhydrid enthält.

4. Vernetzbare, in Wasser redispergierbare Pulverzusammensetzung nach Anspruch 1 bis 3, wobei als Polymer b) ein wasserlösliches Schutzkolloid eingesetzt wird.

5. Vernetzbare, in Wasser redispergierbare Pulverzusammensetzung nach Anspruch 1 bis 4, enthaltend als Komponente c) eine Verbindung aus der Gruppe der Halogenide, insbesonders Fluoride, Sulfate, Phosphate, Carbonate, Acetate und Formiate von Hexamethylendiamin, Triethylentetramin, Carbodihydrazid und von den Dihydraziden der aliphatischen und alicyclischen Dicarbonsäuren bzw. der Hexahydroterephthalsäure.

6. Verwendung der vernetzbaren, in Wasser redispergierbaren Pulverzusammensetzungen nach Anspruch 1 bis 5 als Komponente für die Herstellung von Bauklebern, Putzen, Spachtelmassen, Fußbodenspachtelmassen, Fugenmörtel, Farben, als Alleinbindemittel für Beschichtungsmittel und Klebemittel oder als Bindemittel für Textilien und Papier.

## Claims

1. Crosslinkable powder composition which is redispersible in water and comprises

a) from 30 to 95 parts by weight of one or more water-insoluble, film-forming polymers of free-radically polymerizable, ethylenically unsaturated monomers, where from 0.5 to 10% by weight of the monomers, based on the total weight of the polymer a), are ones having one or more substituents selected from the group consisting of aldehyde, keto, epoxide, isocyanate, carboxylic anhydride and aziridine groups,
b) from 5 to 70 parts by weight of one or more water-soluble, film-forming polymers, where the parts by weight of a) and b) add up to 100 parts by weight, and
c) one or more compounds containing at least two functional groups which are present in salt form and are selected from the group consisting of amines, hydrazides, hydroxylamine esters, aryl- and alkylhydrazines or -hydrazones.

2. Crosslinkable powder composition which is redispersible in water according to Claim 1, comprising as polymer a) polymers comprising one or more monomer units selected from the group consisting of vinyl esters of unbranched or branched alkylcarboxylic acids having from 1 to 15 carbon atoms, methacrylic and acrylic esters of unbranched or branched alcohols having from 1 to 12 carbon atoms, fumaric and maleic monoesters or diesters of unbranched or branched alcohols having from 1 to 12 carbon atoms, dienes, olefins, vinylaromatics and vinyl halides.

3. Crosslinkable powder composition which is redispersible in water according to Claim 1 or 2, wherein the polymer a) comprises one or more monomer units selected from the group consisting of acrolein, vinyl methyl ketone, allyl acetoacetate, vinyl acetoacetate, vinyl or allyl bisacetoacetate and acetoacetylated hydroxyalkyl (meth)acrylates, glycidyl acrylate, glycidyl methacrylate, glycidyl vinyl ether, glycidyl allyl ether, meta- and para-isopropenyl-alpha, alpha-dimethylbenzyl isocyanate (TMI), 2-methyl-2-isocyanatopropyl methacrylate, allylsuccinic anhydride and maleic anhydride.

4. Crosslinkable powder composition which is redispersible in water according to any of Claims 1 to 3, wherein a water-soluble protective colloid is used as polymer b).

5. Crosslinkable powder composition which is redispersible in water according to any of Claims 1 to 4, comprising as component c) a compound selected from the group consisting of halides, in particular fluorides, sulphates, phosphates, carbonates, acetates and formates of hexamethylenediamine, triethylenetetramine, carbodihydrazide and the dihydrazides of aliphatic and alicyclic dicarboxylic acids or of hexahydroterephthalic acid.

6. Use of a crosslinkable powder composition which is redispersible in water according to any of Claims 1 to 5 as a component for producing building adhesives, plasters and renders, knifing fillers, screeds, jointing mortars, paints, as sole binder for coating compositions and adhesives or as binder for textiles and paper.

## Revendications

1. Composition pulvérulente réticulable redispersable dans l'eau, comprenant :

a) de 30 à 95 parties en poids d'un ou de plusieurs polymères filmogènes insolubles dans l'eau à base de monomères éthyléniquement insaturés, polymérisables par voie radicalaire, où de 0,5 à 10% en poids des monomères, par rapport au poids total du polymère a), sont des monomères ayant un ou plusieurs substituants parmi le groupe constitué de groupes aldéhyde, céto, époxy, isocyanate, anhydridecarboxylique et aziridine,
b) de 5 à 70 parties en poids d'un ou de plusieurs polymères filmogènes hydrosolubles, la somme des parties en poids de a) et b) étant de 100 parties en poids, et

c) un ou plusieurs composés renfermant au moins deux groupes fonctionnels présents sous forme de sel, parmi le groupe constitué d'amines, d'hydrazides, d'esters d'hydroxylamine, d'aryl- et d'alkylhydrazines ou -hydrazones.

2.  Composition pulvérulente réticulable redispersable dans l'eau selon la revendication 1, comprenant en tant que polymère a), des polymères ayant un ou plusieurs motifs monomères parmi le groupe constitué d'esters vinyliques d'acides alkylcarboxyliques non ramifiés ou ramifiés, ayant de 1 à 15 atomes de carbone, d'esters méthacryliques et d'esters acryliques d'alcools non ramifiés ou ramifiés ayant de 1 à 12 atomes de carbone, de monoesters ou diesters fumariques et maléiques d'alcools non ramifiés ou ramifiés ayant de 1 à 12 atomes de carbone, de diènes, d'oléfines, de vinylaromatiques et d'halogénures de vinyle.

3.  Composition pulvérulente réticulable redispersable dans l'eau selon la revendication 1 ou 2, dans laquelle le polymère a) comprend un ou plusieurs motifs monomères parmi le groupe constitué de l'acroléine, de la vinylméthylcétone, de l'acétoacétate d'allyle, de l'acétoacétate de vinyle, du bis-acétoacétate de vinyle ou d'allyle et d'hydroxyalkyl(méth)acrylates acétoacétylés, de l'acrylate de glycidyle, du méthacrylate de glycidyle, de l'éther glycidylvinylique, de l'éther glycidylallylique, du meta- et du para-isopropényl-alpha,alpha-diméthylbenzylisocyanate (TMI), du 2-méthyl-2-isocyanatopropylméthacrylate, de l'anhydride allyle succinique et de l'anhydride maléique.

4.  Composition pulvérulente réticulable redispersable dans l'eau selon les revendications 1 à 3, dans laquelle on utilise un colloïde protecteur hydrosoluble en tant que polymère b).

5.  Composition pulvérulente réticulable redispersable dans l'eau selon les revendications 1 à 4, comprenant en tant que composant c), un composé parmi le groupe constitué d'halogénures, en particulier de fluorures, de sulfates, de phosphates, de carbonates, d'acétates et de formiates d'hexaméthylènediamine, de triéthylènetétramine, de carbodihydrazide et des dihydrazides d'acides dicarboxyliques aliphatiques et alicycliques ou de l'acide hexahydrotéréphtalique.

6.  Utilisation de la composition pulvérulente réticulable redispersable dans l'eau selon les revendications 1 à 5, en tant que composant pour la production d'adhésifs de construction, d'enduits crépis, de mastics bouche-pores, de mastics pour planchers,de mortiers à joints de peintures, en tant que liants uniques pour des compositions de revêtements et des adhésifs ou en tant que liants pour textiles et papier.